(19) Europäisches Patentamt / European Patent Office / Office européen des brevets

(11) **EP 2 928 048 A1**

(12) **EUROPEAN PATENT APPLICATION**
published in accordance with Art. 153(4) EPC

(43) Date of publication:
07.10.2015 Bulletin 2015/41

(21) Application number: 13857849.7

(22) Date of filing: 09.10.2013

(51) Int Cl.:
H02K 3/50 (2006.01)  H02K 1/18 (2006.01)
H02K 3/18 (2006.01)  H02K 5/22 (2006.01)

(86) International application number:
PCT/JP2013/077512

(87) International publication number:
WO 2014/083947 (05.06.2014 Gazette 2014/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.11.2012 JP 2012259868

(71) Applicant: Mitsuba Corporation
Kiryu-shi, Gunma 376-8555 (JP)

(72) Inventors:
• MIYAKI, Atsushi
Kiryu-shi
Gunma 376-8555 (JP)

• YAMAMOTO, Tsutomu
Kiryu-shi
Gunma 376-8555 (JP)
• SATO, Masanao
Kiryu-shi
Gunma 376-8555 (JP)
• TANABE, Takuto
Kiryu-shi
Gunma 376-8555 (JP)

(74) Representative: Cabinet Laurent & Charras
Le Contemporain
50 Chemin de la Bruyère
69574 Dardilly Cedex (FR)

(54) **ELECTRIC MOTOR**

(57) An electric motor includes a stator (3) formed by connecting a plurality of split cores (61), each of the split cores having one tooth (64), a small coil (81) having a three-phase structure formed by winding a winding wire 12 to each of the teeth (64), a small coil group formed by connecting or continuously connecting terminals of each of the small coils (81) adjacent in the circumferential direction to each other and by connecting a plurality of the small coils (81) in series, and furthermore, three units of the phase coil formed by electrically connecting two small coil groups in parallel. When the number of series connections of the small coils (81) which the series connection of the small coils forms the small coil group is defined as TN, and when the number of the split cores (61) is defined as CN, the number of series connections TN and the number CN are set to satisfy $CN = 6 \times TN$. Each phase coil is connected in a delta connection by connecting a harness (50) to one end of each phase coil, and the other end of the harness (50) extends to the outside of the stator housing.

FIG. 4

EP 2 928 048 A1

**Description**

Technical Field

The present invention relates to an electric motor used for, for example, motorcycles.

Priority is claimed on Japanese Patent Application No. 2012-259868 filed on November 28, 2012, the contents of which are incorporated herein by reference.

Background Art

Electric motors include the so-called inner-rotor-type brushless motor, and the brushless motor is provided with a stator fixed internally in a stator housing, and a rotor arranged at a center in a radial direction of the stator housing and supported rotatably with respect to the stator. On an outer circumferential surface of the rotor, a plurality of permanent magnets is provided. The stator includes a stator core having a substantially cylindrical shape, and a plurality of teeth protruding toward the inner side of the stator in the radial direction from the stator core.

An insulator made of resin which is an electrical insulating material is mounted to each of the teeth, and a coil is wound thereto via this insulator. Power from the external power is supplied to the coil, a repulsive force or attraction force between the magnetic flux generated in the coil and the permanent magnet is generated, and the rotor is rotated.

Here, in some cases, in order to achieve downsizing and to improve the ease of assembly, a bus-bar unit in which a plurality of bus bars made of metal are implanted inside a resin mold body formed in an substantially annular shape in a state in which the bus bars are electrically insulated from each other is used as a means of power supply to supply power to the coil.

For example, the bus-bar unit connecting the coils in a star-connection is stacked such that phase bus bars for each phase (U-phase, V-phase, and W-phase) having a tabular shape are separated away from a neutral point bus bar in an axial direction, and the bus-bar unit is molded by the resin mold body. While legs protruding toward a stator core are integrally molded in an outer circumferential surface of the resin molded body, recesses capable of fitting the legs to a portion corresponding to the legs are formed in the insulator. The bus-bar unit is arranged on the insulator, so as to fit the legs into the recesses (see for example, Patent Document 1).

[Prior Art Documents]

[Patent Documents]

[Patent Document 1] Japanese Unexamined Patent Application, First Publication No. 2010-233327

DISCLOSURE OF THE INVENTION

Problems to be Solved by the Invention

As described above, the bus-bar unit is excellent in terms of connecting the coils for each phase by a predetermined wiring system while saving space. However, there is a problem in that costs increase due to its complicated structure.

If the coils for each phase are simply connected by harnesses or the like without using the bus-bar unit, a wiring routing of the harnesses and wiring work between the harnesses and the coils for each phase becomes troublesome.

The present invention has been made in view of the above circumstances, and the present invention provides a compact electric motor which does not complicate wiring-connection workability and can reduce production costs.

Means for Solving the Problem

According to an aspect of the present invention, an electric motor includes:

a stator formed by connecting a plurality of split cores, each of the split cores having one tooth;
a small coil having a three-phase structure formed by winding a winding wire to each of the teeth by a concentrated winding system;
a small coil group formed by connecting or continuously connecting terminals of each of the small coils adjacent in the circumferential direction to each other and by connecting a plurality of the small coils in series; and ,
three units of the phase coil formed by electrically connecting two small coil groups in parallel,
wherein when the number of series connections of the small coils which the series connection of the small coils forms the small coil group is defined as TN, and when the number of the split cores is defined as CN, the number of series connections TN and the number CN are set to satisfy

$$CN = 6 \times TN,$$

and

wherein each phase coil is connected in a delta connection by connecting a harness to one end of each phase coil, and the other end of the harness extends to the outside of the stator housing.

By the above configuration, since the coils for each phase can connect without using a bus-bar unit as in the prior art, production costs can be reduced. Also, the terminals of each of the small coils adjacent in the circumferential direction are connected or continuously connected to each other, the small coils are connected in series, and thereby a small coil group is formed. And furthermore, two small coil groups are electrically connected in parallel to form three units of the phase coil. Since the number of series connections of the small coils TN and the number of the split cores CN are set to satisfy $CN = 6 \times TN$, the connection points between the harnesses and each of the small coils can be minimized, and complication of wiring-connection workability can be prevented.

According to a second aspect of the present invention, in the electric motor according to the first aspect of the present invention, two terminals of the small coil extending from a predetermined split core are intersected with each other, and these two terminals are respectively connected or continuously connected to terminals of the small coils formed to other split cores arranged on the opposite side of each of these terminals.

By the above configuration, the terminals of the small coils adjacent in the circumferential direction can connect to each other.

According to a third aspect of the present invention, in the electric motor according to the first aspect or second aspect of the present invention, a stator housing housing the stator is included, wherein an outlet port of which the other end of each harness extends to the outside of the stator housing is provided to the stator housing, and two harnesses connected to the one end of the phase coil arranged at the position farthest from the outlet port are routed to intersect with each other in the stator housing.

By the above configuration, an overlapping portion of the harnesses routed inside the stator housing can be distributed. That is, the overlapping portions of the harnesses are not concentrated, and the harnesses routed therein can be prevented from becoming bulky. Accordingly, the entirety of the electric motor can reliably achieve downsizing.

Effects of the Invention

According to the above electric motor, since the coils for each phase can connect without using a busbar unit as in a prior art, production costs can be reduced. Also, the terminals of the small coils adjacent in the circumferential direction are connected to each other to form a small coil group in which two or three small coils are connected in series, and furthermore, since two small coil groups are electrically connected in parallel to form each of the phase coils configured by three phases, i.e., U-phase, V-phase and W-phase, the connection points between the harnesses and each of the small coils can be minimized, and complication of wiring-connection workability can be prevented.

BRIEF DESCRIPTION OF THE DRAWINGS

FIG. 1 is a vertical sectional view of a brushless motor according to a first embodiment of the present invention.
FIG. 2 is a planar view of the brushless motor without the cover of the brushless motor according to the first embodiment of the present invention.
FIG. 3 is a planar view of a split core according to the first embodiment of the present invention.
FIG. 4 is a development view of a stator according to the first embodiment of the present invention.
FIG. 5 is a connection diagram of a small coil according to the first embodiment of the present invention.
FIG. 6 is a development view of a stator according to a second embodiment of the present invention.
FIG. 7 is a connection diagram of a small coil according to the second embodiment of the present invention.
FIG. 8 is a development view of a stator according to a third embodiment of the present invention.
FIG. 9 is a connection diagram of a small coil according to the third embodiment of the present invention.

EMBODIMENTS OF THE INVENTION

{First Embodiment}

<Electric motor>

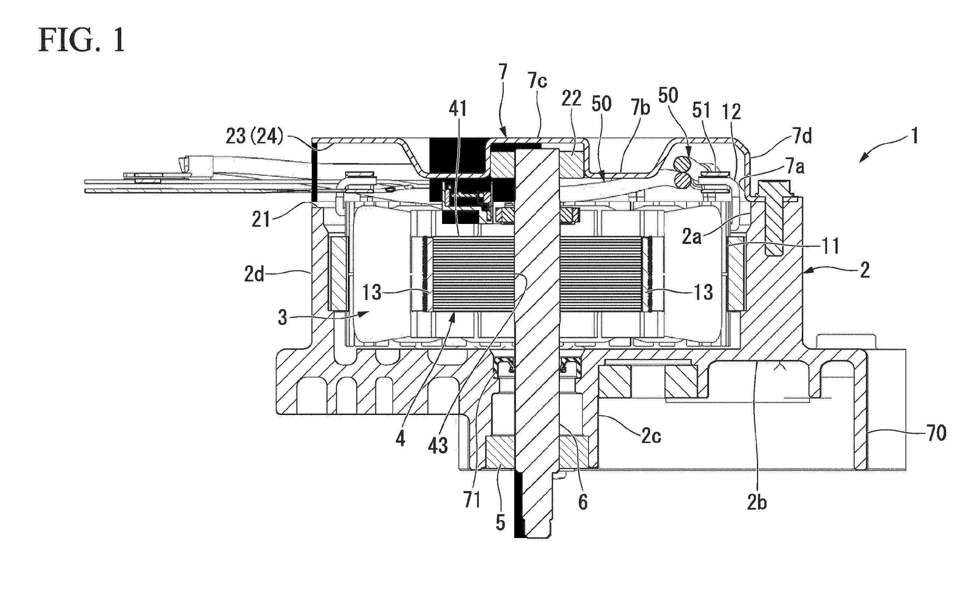

Next, a first embodiment of the present invention is explained based on FIG. 1 to FIG. 5.
FIG. 1 is a vertical sectional view of a brushless motor.
As shown in the figure, the brushless motor 1 is used for, for example, motorcycles. The brushless motor 1 includes a stator 3 which is pressed into a stator housing 2 formed in a cylindrical shape having a bottom portion, a rotor 4 provided to be rotatable with respect to the stator 3, a harness 50 an end of which is connected to a winding wire 12 wound to the stator 3, and which is for supplying a current to the winding wire 12, and a cover 7 provided to cover an opening 2a of the stator housing 2.
In the opening 2a of the stator housing 2, an outlet port 21 is formed so that the other end of the harness 50 extends to the outside of the opening 2a. The other end of the harness 50 extends to the outside of the stator housing 2 via the outlet port 21.
In addition, at a bottom 2b of the stator housing 2, a gear casing 70 is integrally formed at the opposite side of the opening 2a. A gear, which is not shown and is engaged to the rotor 4, is housed in the gear casing 70.
Furthermore, at a bottom 2b of the stator housing 2, a boss 2c, which is protruded to the outside in an axial direction at a center in a radial direction and having a cylindrical shape, is integrally formed. A bearing 5 configured to support rotatably an end of a rotation shaft 6 of the rotor 4 is pressed into the outside of the boss 2c in the axial direction. On the other hand, a seal 71 configured to enhance the sealing properties between the boss 2c and the rotary shaft 6 is provided in the inside of the boss 2c in the axial direction.

<Stator>

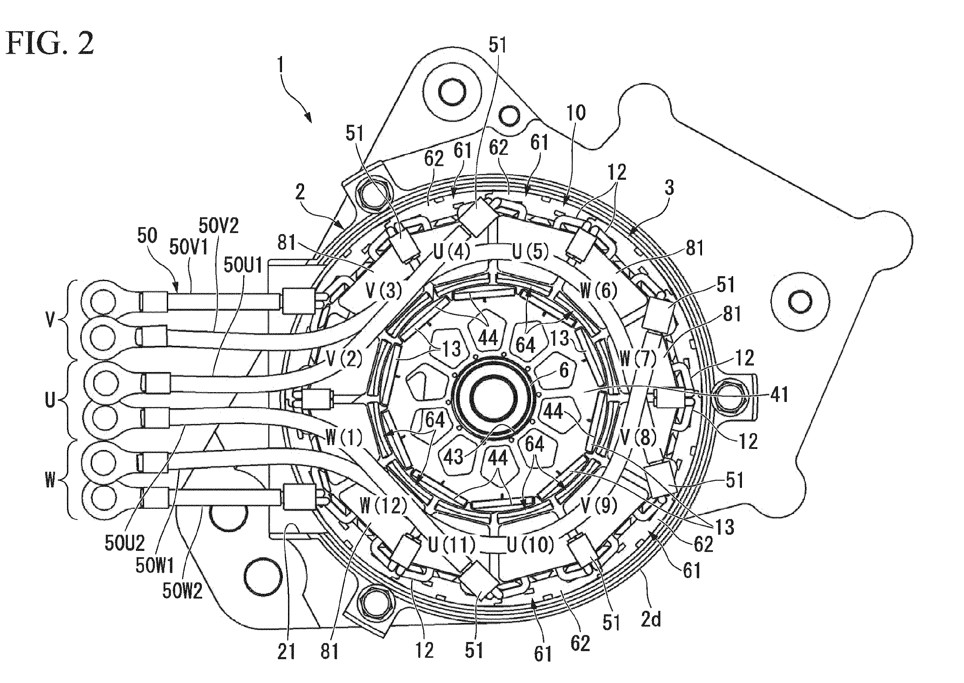

FIG. 2 is a planar view of the brushless motor without the cover of the brushless motor.

As shown in FIG. 1 and FIG. 2, the stator 3 includes a stator core 10 having a substantially cylindrical shape, and an outer circumferential surface of the stator core 10 is pressed into an inner circumferential surface of a cylindrical portion 2d of the stator housing 2.

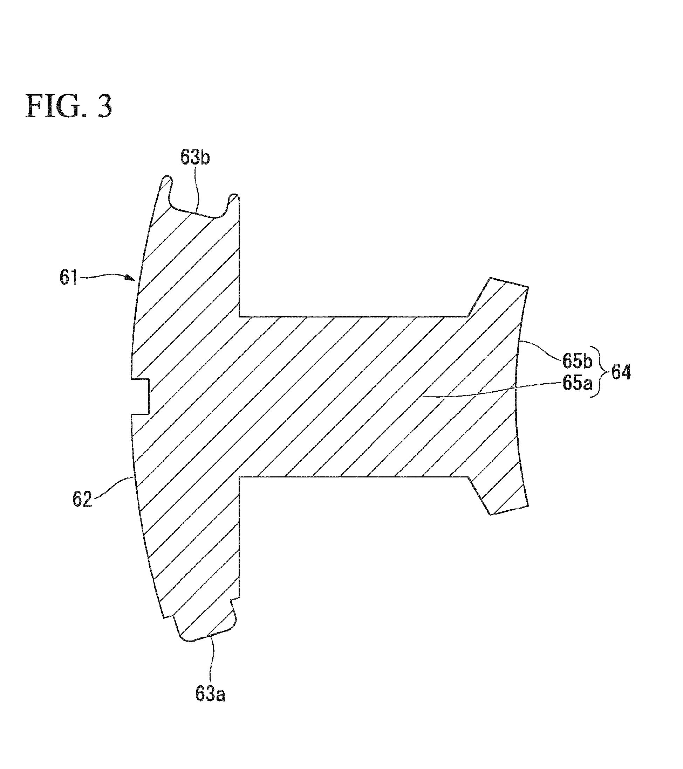

FIG. 3 is a planar view of a split core.

Here, as shown in FIG. 1 to FIG. 3, the stator core 10 has the form of a split core which can be divided in a circumferential direction. A split core 61 divided from the stator core 10 is formed by laminating in the axial direction a plurality of plates made of, for example, a magnetic material, and twelve pieces of the split cores 61 are provided. The split core 61 includes a core body 62 extending in the circumferential direction. The core body 62 is a portion forming an annular magnetic path of the stator core 10 and fitting internally into the inner circumferential surface of the stator housing 2, and the core body 62 is formed in a substantially arc shape in a planar view in the axial direction.

Both ends of the core body 62 in the circumferential direction are connection parts 63a, 63b connected by pressing other core bodies 62 into the connection parts 63a, 63b. The connection part 63a is formed in a convex shape and the other connection part 63b is formed in a concave shape which can receive the connection part 63a. Accordingly, the stator core 10 having a substantially cylindrical shape can be formed by connecting each of the core bodies 62.

In an inner circumferential side of each of the core bodies 62, teeth 64 are integrally extended from a substantially central portion in the circumferential direction toward a rotation center along the radial direction. Here, since twelve pieces of split cores 61 are provided, twelve teeth 64 are included in the stator 3.

Each of the teeth 64 is formed in a substantially T-letter shape in a planar view in the axial direction, and includes a winding body part 65a extending in the radial direction, and an inner circumferential part 65b extending in a circumferential direction.

On the winding body part 65a, the winding wire 12 is wound by a concentrated winding system with interposing an insulator 11 therebetween, and a small coil 81 is formed. The insulator 11 is an insulation material to insulate between the teeth 64 and the winding wire 12, and is attached from both end sides in the axial direction of each of the split cores 61.

<Structure of the small coil>

Next, a wiring connection structure of the small coil 81 will be explained based on FIG. 2, FIG. 4 and FIG. 5.

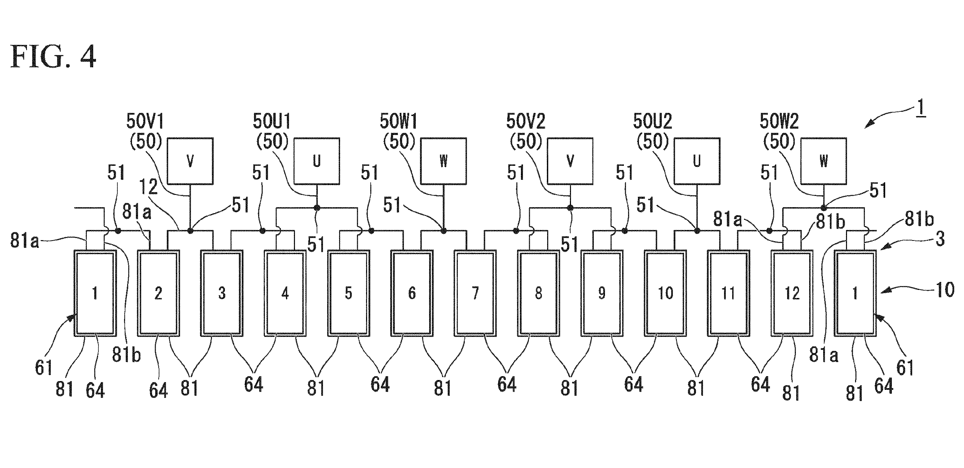

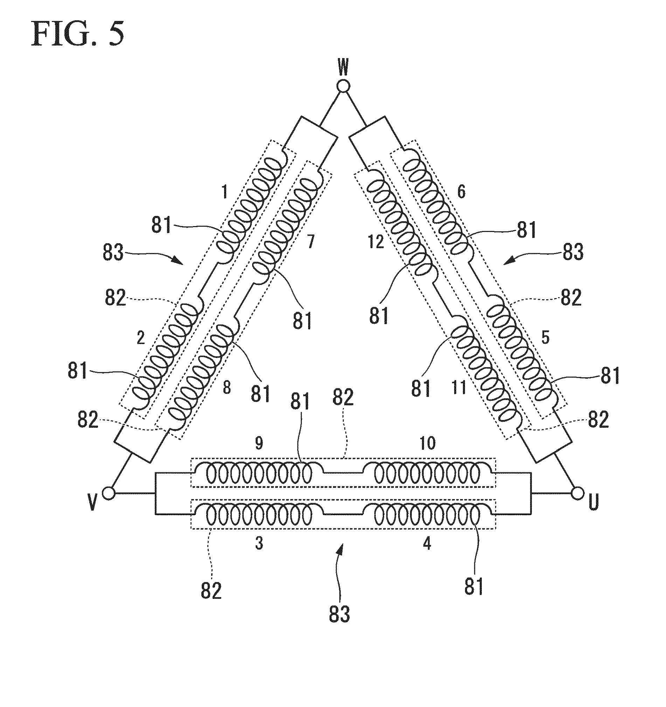

FIG. 4 is a development view of the stator, and FIG. 5 is a wiring connection diagram of the small coils. In addition, in FIG. 4 and FIG. 5, each of the teeth 64 and the small coils 81 wound to these teeth 64 are numbered and the explanation will be given (the same applies to the following embodiments).

As shown in FIG. 2, FIG. 4, and FIG. 5, terminals of the small coils 81 adjacent in the circumferential direction are connected to each other by a crimp-type terminal 51. Also, at each crimp-type terminal 51 described below, an end of harness 50 is connected.

- A crimp-type terminal 51 with which a terminal of a small coil 81 wound to a No.2 tooth 64 and a terminal of a small coil 81 wound to a No.3 tooth 64 are connected.
- A crimp-type terminal 51 with which a terminal of a small coil 81 wound to a No.4 tooth 64 and a terminal of a small coil 81 wound to a No.5 tooth 64 are connected.
- A crimp-type terminal 51 with which a terminal of a small coil 81 wound to a No.6 tooth 64 and a terminal of a small coil 81 wound to a No.7 tooth 64 are connected.
- A crimp-type terminal 51 with which a terminal of a small coil 81 wound to a No. 8 tooth 64 and a terminal of a small coil 81 wound to a No.9 tooth 64 are connected.
- A crimp-type terminal 51 with which a terminal of a small coil 81 wound to a No. 10 tooth 64 and a terminal of a small coil 81 wound to a No.11 tooth 64 are connected.
- A crimp-type terminal 51 with which a terminal of a small coil 81 wound to a No.12 tooth 64 and a terminal of a small coil 81 wound to a No.1 tooth 64 are connected.

Here, since twelve pieces of the split cores 61 are provided and a three-phase structure is established, the harness 50 for one-phase is configured by two wires, and thereby, the number of the wires of the harnesses 50 is six wires in total. That is, the harnesses 50 are configured by U-phase harnesses 50U1, 50U2 (two wires), V-phase harnesses 50V1, 50V2 (two wires), and W-phase harnesses 50W1, 50W2 (two wires).

In addition, two terminals extending from each of the small coils 81 formed to the No. 1, 4, 5, 8, 9, and 12 teeth 64, intersect with each other. These two terminals are respectively connected to the terminals of the small coils 81 of other teeth 64 arranged on the opposite side of each of these terminals, by the crimp-type terminal 51.

Hereinafter, a more specific explanation will be given. In addition, reference numerals are given to the terminal portions described below in order to facilitate understanding of the description.

First, two terminals 81a, 81b extending from the small coil 81 formed to the No.1 tooth 64, intersect with each other. Then, one terminal 81a of the two terminals 81a, 81b is connected to a terminal 81a of a small coil 81 of the No. 2 tooth 64 arranged on the opposite side of the one terminal 81a, by the crimp-type terminal 51.

In addition, the other terminal 81b of the small coil 81 of the No.1 tooth 64 is connected to a terminal 81a of a small coil 81 of the No. 12 tooth 64 arranged on the opposite side of the other terminal 81b, by the crimp-type terminal 51.

Also, two terminals 81a, 81b extending from each of the small coils 81 formed to the No. 4, 5, 8, 9 and 12 teeth 64 are configured the same as the two terminals 81a, 81b extending from the small coil 81 of the No. 1 tooth 64.

Under such a configuration, the harnesses 50U1 to 50W2 of each phase configured by two wires are configured such that the harnesses 50U1 to 50W2 having the same phase to each other are connected to the same terminals (not shown) of an external power supply. Accordingly, as shown in detail in FIG. 5, two small coils 81 are connected in series to form a small coil group 82. In addition, two small coil groups 82 are connected in parallel to form three units of the phase coil 83, and these phase coils 83 form a delta connection.

Here, in the first embodiment, when two small coil groups 82 are connected in parallel, the number of series connections of the small coils 81 (thereby forming a small coil group 82) is defined as TN, and the number of the split cores 61 (teeth 64) is defined as CN, the number of series connections TN and the number of the split cores 61 CN are set to satisfy

$$\text{Expression (1):} \quad CN = 6 \times TN.$$

In the first embodiment, since TN, which is the number of series connections of the small coils 81, is set to "2" and CN, which is the number of the split cores 61, is set to "12", the expression (1) is satisfied.

In addition, one end of the harnesses 50U1 to 50W2 of each phase is connected to the terminal of each of the small coils 81 via the crimp-type terminal 51, and the other end of these harnesses extends to the outside of the stator casing 2 via the outlet port 21 formed in the stator housing 2.

Here, among the harnesses 50U1 to 50W2 of each phase, the harness 50V2 of the V-phase and the harness 50W1 of the W-phase are connected to the two crimp-type terminals 51 arranged at the position farthest from the outlet port 21 formed at the stator housing 2.

These harnesses, i.e., the harness 50V2 of the V-phase and the harness 50W1 of the W-phase, are routed to intersect with each other in the stator housing 2.

More specifically, the harness 50V2 of the V-phase and the harness 50W1 of the W-phase are not routed on the shortest path to the outlet port 21 of the stator housing 2, but they are routed to bypass around the rotor 4. Thus, in the stator housing 2, the harness 50V2 of the V-phase and the harness 50W1 of the W-phase intersect with each other at the opposite side of the outlet port 21 with the rotation shaft 6 being set as a center.

While on the other hand, the harnesses 50 other than the harness 50V2 of the V-phase and the harness 50W1 of the W-phase are routed on the shortest path to the outlet port 21 of the stator housing 2.

<Rotor>

In FIG. 1 and FIG. 2, the rotor 4 includes the rotation shaft 6 one end of which is supported rotatably by a bearing 5 of the stator housing 2, a rotor core 41 fixed to the rotation shaft 6 by fitting from outside the rotation shaft 6, and a magnet 13 arranged along the circumferential direction in the rotor core 41.

The rotor core 41 is formed by laminating in the axial direction a plurality of flat rolled magnetic steel sheets and strips formed in a substantially disk shape, and a press-fitting hole 43 which can press fit the rotation shaft 6 to the center in the radial direction is formed in the rotor core 41.

In addition, a thickness of the rotor core 41 in the axial direction is set substantially the same as the thickness of the stator core 10 in the axial direction. Furthermore, in the outer circumferential part of the rotor core 41, ten slits 44 penetrated in the axial direction are formed at equal intervals in the circumferential direction. The magnets 13 are inserted into these slits 44 and fixed therein.

The magnet 13 is a permanent magnet made of neodymium or the like having a segment type formed in a blockish shape, and arranged in the slit 44 so that the magnetic poles are changed sequentially in the circumferential direction. The length in the axial direction of the magnet 13 is set so as to substantially match the length in the axial direction of the rotor core 41.

Here, when the number of magnets 13, that is, the number of the magnetic poles is defined as P, and when the number of slots formed between each of the teeth 64 is defined as S, the number of the magnetic poles P and the number of slots S are set to satisfy

$$\text{Expression (2):} \quad P = S - 2.$$

In the first embodiment, the number of the magnetic poles P is set to "10", and the number of slots S is set to "12" because the number of teeth 64 is 12. Thus, the expression (2) is satisfied.

<Cover>

The cover 7 provided to cover the opening 2a of the stator housing 2 is formed in a shallow cylindrical shape having a bottom portion. The cover 7 is arranged so that an opening 7a facing the stator housing 2 side. In the bottom 7b of the cover 7, the boss 7c protrudes outward in the axial direction at the center in the radial direction. A bearing 22 rotatably supporting the other end of the rotation shaft 6 is pressed fit into the boss 7c.

An outer circumferential portion side of the bottom 7b of the cover 7 is formed so as to swell outward in the axial direction, and the connection part between each small coil 81 and each harness 50 is prevented from bending by force. Furthermore, in the cylindrical portion 7d of the cover 7, an outlet port 23 is formed at a portion corresponding to the outlet port 21 of the stator housing 2. The other end of each of the harnesses 50 extends from an opening 24 surrounded by the outlet port 21 of the stator housing 2 and the outlet port 23 of the cover 7.

Under such a configuration, the brushless motor 1 is adapted to generate a magnetic field in the stator core 10 by supplying a current supplied from the external power supply to each phase coil 83 via each harness 50. Then, the rotor 4 rotates by the magnetic suction force and repulsive force between the magnetic field and the magnet 13.

<Effects>

Thus, according to the first embodiment described above, since the terminals of the small coils 81 adjacent in the circumferential direction are connected to each other, TN which is the number of series connections of the small coils 81 (thereby forming the small coil group 82) and CN which is the number of the split cores 61 (teeth 64) are set to satisfy the expression (1) when two small coil groups 82 are connected in parallel, the harness 50 is connected to one end of each phase coil 83 along with connecting these three units of the phase coil 83 in a delta connection, and the other end thereof extends to the outside of the stator housing 2 (refer to FIG. 5), the first embodiment can complete the wiring connection of the phase coils 83 without using a bus-bar unit like the prior art, and production costs can be reduced. In addition, the connection points between the harnesses 50 and each of the small coils 81 can be minimized, and complication of wiring-connection workability can be prevented.

Furthermore, two terminals extending from each of the small coils 81 formed to the No. 1, 4, 5, 8, 9, and 12 teeth 64, are intersected, and these two terminals are respectively connected to the terminals of the small coils 81 formed to other teeth 64 arranged on the opposite side of each of these terminals, by the crimp-type terminal 51. By such a configuration, it makes possible to connect the terminals of the small coils 81 adjacent in the circumferential direction to each other by the crimp-type terminal 51. In addition, the harnesses 50U1 to 50W2 of each phase can be configured by two wires.

Here, among the harnesses 50U1 to 50W2 of each phase, the harness 50V2 of the V-phase and the harness 50W1 of the W-phase are connected to the two crimp-type terminal 51 arranged at the position farthest from the outlet port 21 formed at the stator housing 2. These harnesses, which are the harness 50V2 of the V-phase and the harness 50W1 of the W-phase, are routed to intersect with each other in the stator housing 2. Thus, a portion of overlapping (an overlapping portion) of the harnesses 50 routed inside the stator housing 2 can be distributed. That is, the overlapping portion of the harnesses 50 is not concentrated, and the harnesses 50 routed therein can be prevented from becoming bulky. Accordingly, whole of the brushless motor 1 can reliably achieve downsizing.

{Second Embodiment}

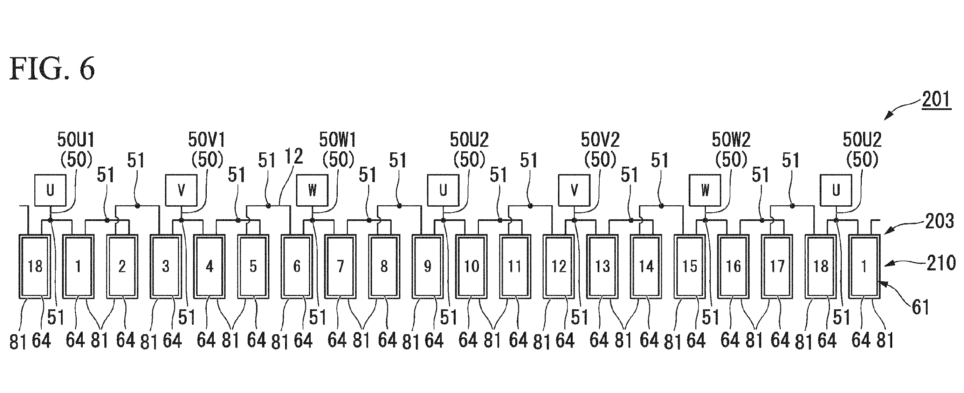

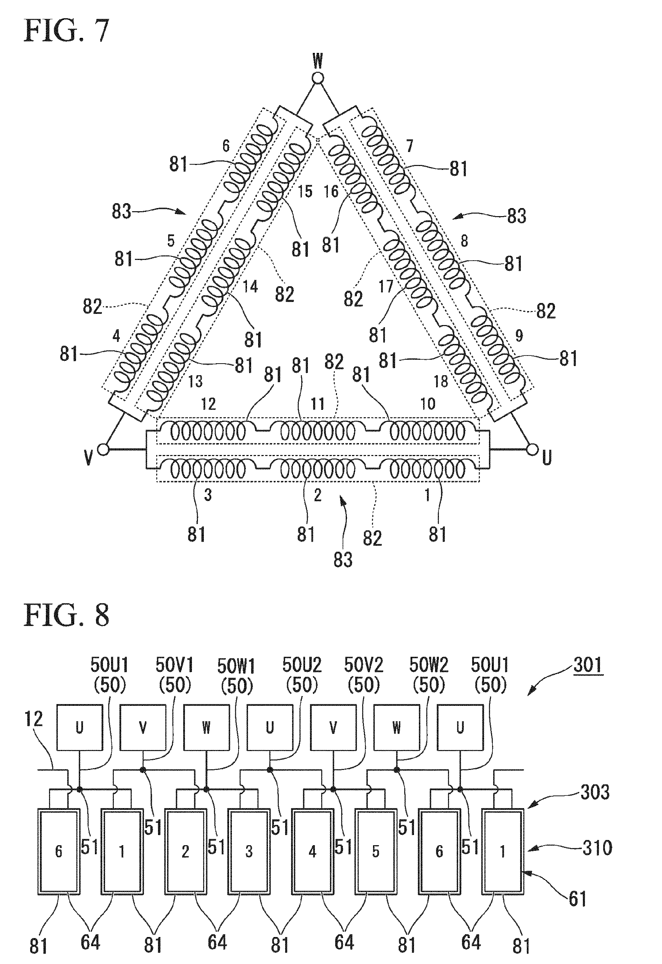

Next, a second embodiment of the present invention is explained based on FIG. 6 and FIG. 7. The explanation has been made by numbering the same reference numbers to the same illustrative embodiment of the first embodiment (the same applies to the following embodiments).

FIG. 6 is a development view of a stator according to the second embodiment, and FIG. 5 is a connection diagram of a small coil according to the second embodiment.

In the second embodiment, the brushless motor 201 is used for, for example, motorcycles, the basic structure such that the brushless motor 201 includes a stator 203, a rotor (not shown in the second embodiment) provided to be rotatable with respect to the stator 203, and a harness 50 an end of which is connected to a winding wire 12 wound to the stator 203, and which is for supplying a current to the winding wire 12 is the same as the first embodiment. Also, as in the first embodiment, a stator core 210 of the stator 203 has the form of a split core which can be divided in the circumferential direction, and the winding wire 12 is wound to teeth 64 of the split core 61 by a concentrated winding system (the same applies to the following embodiments).

Here, the first embodiment described above and the second embodiment is different in that the stator core 210 of the stator 203 in the second embodiment is configured by eighteen pieces of the split cores 61, whereas the stator core 10 of the stator 3 in the first embodiment is configured by twelve pieces of the split cores 61.

In addition, it is not specifically shown in the second embodiment, but the number of the magnetic poles P is set to "16". That is, in the second embodiment, the number of slots S (the number of teeth 64) is set to "18" and the number of the magnetic poles P is set to "16". Thus, the number of slots S and the number of the magnetic poles P satisfy the expression (2) of the aforementioned first embodiment.

Under such a configuration, the small coil 81 formed by winding the winding wire 12 to each of the teeth 64 is connected as follows.

<Structure of the small coil>

As shown in FIG. 6 and FIG. 7, the harnesses 50 includes U-phase harnesses 50U1, 50U2 (two wires), V-phase harnesses 50V1, 50V2 (two wires), and W-phase harnesses 50W1, 50W2 (two wires). The terminals of the small coils 81 adjacent in the circumferential direction are connected to each other by a crimp-type terminal 51.

Here, one end of each of the harnesses 50 is connected to the following crimp-type terminal 51.

- A crimp-type terminal 51 with which a terminal of a small coil 81 wound to a No.18 tooth 64 and a terminal of a small coil 81 wound to a No.1 tooth 64 are connected.
- A crimp-type terminal 51 with which a terminal of a small coil 81 wound to a No.3 tooth 64 and a terminal of a small coil 81 wound to a No.4 tooth 64 are connected.
- A crimp-type terminal 51 with which a terminal of a small coil 81 wound to a No.6 tooth 64 and a terminal of a small coil 81 wound to a No.7 tooth 64 are connected.
- A crimp-type terminal 51 with which a terminal of a small coil 81 wound to a No.9 tooth 64 and a terminal of a small coil 81 wound to a No. 10 tooth 64 are connected.
- A crimp-type terminal 51 with which a terminal of a small coil 81 wound to a No. 12 tooth 64 and a terminal of a small coil 81 wound to a No. 13 tooth 64 are connected.
- A crimp-type terminal 51 with which a terminal of a small coil 81 wound to a No. 15 tooth 64 and a terminal of a small coil 81 wound to a No.16 tooth 64 are connected.

In addition, two terminals extending from each of the small coils 81 formed to the No. 2, 5, 8, 11, 14 and 17 teeth 64 intersect with each other. These two terminals are respectively connected to the terminals of the small coils 81 of other teeth 64 arranged on the opposite side of each of these terminals, by the crimp-type terminal 51.

Under such a configuration, three small coils 81 are connected in series to form a small coil group 82. In addition, two small coil groups 82 are connected in parallel to form three units of the phase coil 83, and these phase coils 83 form a delta connection.

Here, in the second embodiment, in a state of connecting two small coil groups 82 in parallel, when the number of series connections of the small coils 81 (thereby forming a small coil group 82) is defined as TN, and when the number of the split cores 61 (teeth 64) is defined as CN, the number of series connections TN and the number of the split cores 61 CN are set to satisfy the expression (1) of the aforementioned first embodiment.

In the second embodiment, since TN, which is the number of series connections of the small coils 81, is set to "3" and CN, which is the number of the split cores 61, is set to "18", the expression (1) of the aforementioned first embodiment is satisfied.

Therefore, the above second embodiment can obtain the same effects as the aforementioned first embodiment.

{Third Embodiment}

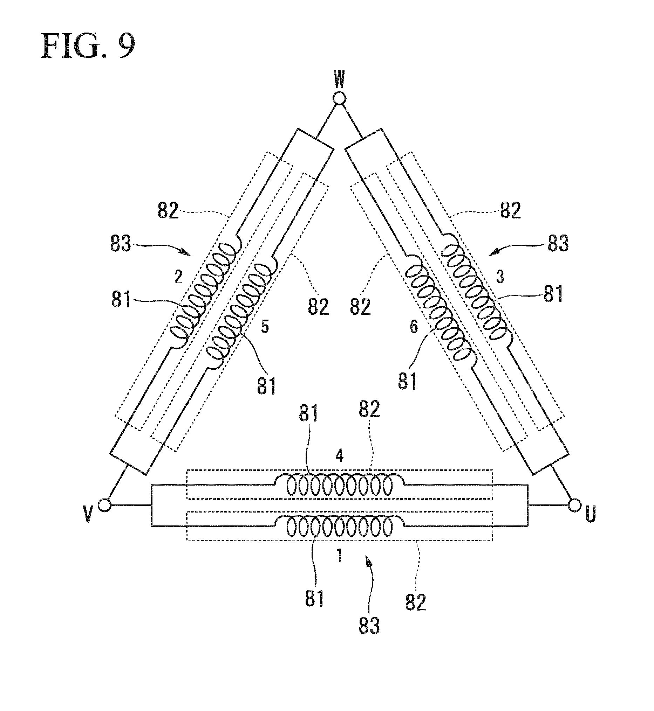

Next, a third embodiment of the present invention is explained based on FIG. 8 and FIG. 9.

FIG. 8 is a development view of a stator according to the third embodiment, and FIG. 9 is a connection diagram of a small coil according to the third embodiment.

Here, the aforementioned first embodiment and the third embodiment is different in that the stator core 310 of the stator 303 in the third embodiment of the brushless motor 301 is configured by six pieces of the split cores 61, whereas the stator core 10 of the stator 3 in the first embodiment is configured by twelve pieces of the split cores 61.

In addition, it is not specifically shown in the third embodiment, but the number of the magnetic poles P is set to "4". That is, in the third embodiment, the number of slots S (the number of teeth 64) is set to "6" and the number of the magnetic poles P is set to "4". Thus, the number of slots S and the number of the magnetic poles P satisfy the expression (2) of the aforementioned first embodiment.

Under such a configuration, the small coil 81 formed by winding the winding wire 12 to each of the teeth 64 is connected as follows.

<Structure of the small coil>

As shown in FIG. 8 and FIG. 9, the harnesses 50 includes U-phase harnesses 50U1, 50U2 (two wires), V-phase harnesses 50V1, 50V2 (two wires), and W-phase harnesses 50W1, 50W2 (two wires). The terminals of the small coils 81 adjacent in the circumferential direction are connected to each other by a crimp-type terminal 51, and one end of the harness 50 is connected.

In addition, two terminals extending from each of the small coils 81 formed to each of the teeth 64 intersect with each other. These two terminals are respectively connected to the terminals of the small coils 81 of other teeth 64 arranged on the opposite side of each of these terminals, by the crimp-type terminal 51.

Under such a configuration, three units of the phase coil 83 connecting two small coils 81 in parallel is formed, and these phase coils 83 form a delta connection. In other words, a single small coil group 82 is formed of a single small coil 81, and two units of this small coil group 82 are connected in parallel to form the phase coil 83.

Here, in the third embodiment, in a state of connecting two small coil groups 82 in parallel, when the number of series connections of the small coils 81 (thereby forming a small coil group 82) is defined as TN, and when the number of the split cores 61 (teeth 64) is defined as CN, the number of series connections TN and the number of the split cores 61 CN are set to satisfy the expression (1) of the aforementioned first embodiment.

In the third embodiment, since TN, which is the number of series connections of the small coils 81, is set to "1" and CN, which is the number of the split cores 61, is set to "6", the expression (1) of the aforementioned first embodiment is satisfied.

Therefore, the above third embodiment can obtain the same effects as the aforementioned first embodiment.

The present invention is not limited to the configuration of the above described embodiment, and it includes various changes made to the above embodiment without departing from the spirit thereof.

For example, the above embodiment was explained in a case that the brushless motor 1 is used for motorcycles. However, it is not limited thereto, and it is possible to apply the structure of the brushless motor 1 of the embodiment to a various electric motors.

In addition, the above embodiment was explained in a case that the terminals of the small coils 81 adjacent in the circumferential direction are connected to each other by a crimp-type terminal 51. However, it is not limited thereto, and it may be a structure which can electrically connect the terminals of the small coils 81 to each other. For example, it may be configured to connect small coils 81 adjacent to each other in a manner such that the small coils 81 are formed in a continuous way by a single winding wire 12.

FIELD OF INDUSTRIAL APPLICATION

According to the above electric motor, since the coils for each phase can connect without using a bus-bar unit as in the prior art, production costs can be reduced. Also, the terminals of the small coils adjacent in the circumferential direction are connected to each other to form a small coil group in which two or three small coils are connected in series, and furthermore, since two small coil groups are electrically connected in parallel to form each of the phase coils configured by three phases, i.e., U-phase, V-phase and W-phase, the connection points between the harnesses and each small coil can be minimum, and complication of wiring-connection workability can be prevented.

[Description of Reference Signs]

1: Brushless motor (Electric motor)
2: Stator housing
3: Stator
10: Stator core
12: Winding wire
21: Outlet port
50: Harness
50U1, 50U2: U-phase harness (Harness)
50V1, 50V2: V-phase harness (Harness)
50W1, 50W2: W-phase harness (Harness)
61: Split core
64: Teeth
81: Small coil
82: Small coil group
83: Phase coil

**Claims**

1. An electric motor comprising:

   a stator formed by connecting a plurality of split cores, each of the split cores having one tooth;
   a small coil having a three-phase structure formed by winding a winding wire to each of the teeth by a concentrated winding system;
   a small coil group formed by connecting or continuously connecting terminals of each of the small coils adjacent in the circumferential direction to each other and by connecting a plurality of the small coils in series; and ,
   three units of the phase coil formed by electrically connecting two small coil groups in parallel, wherein when the number of series connections of the small coils which the series connection of the small coils forms the small coil group is defined as TN, and when the number of the split cores is defined as CN, the number of series connections TN and the number CN are set to satisfy

   $$CN = 6 \times TN,$$

   and
   wherein each phase coil is connected in a delta connection by connecting a harness to one end of each phase coil, and the other end of the harness extends to the outside of the stator housing.

2. The electric motor according to Claim 1, wherein two terminals of the small coil extending from a predetermined split core are intersected with each other, and these two terminals are respectively connected or continuously connected to terminals of the small coils formed to other split cores arranged on the opposite side of each of these terminals.

3. The electric motor according to Claim 1 further comprising:

a stator housing housing the stator, wherein an outlet port of which the other end of each harness extends to the outside of the stator housing is provided to the stator housing, and two harnesses connected to the one end of the phase coil arranged at the position farthest from the outlet port are routed to intersect with each other in the stator housing.

4. The electric motor according to Claim 2 further comprising:

a stator housing housing the stator, wherein an outlet port of which the other end of each harness extends to the outside of the stator housing is provided to the stator housing, and two harnesses connected to the one end of the phase coil arranged at the position farthest from the outlet port are routed to intersect with each other in the stator housing.

FIG. 1

EP 2 928 048 A1

FIG. 2

EP 2 928 048 A1

FIG. 3

# FIG. 4

EP 2 928 048 A1

FIG. 5

FIG. 6

## FIG. 7

## FIG. 8

FIG. 9

<table>
<tr><td colspan="2" align="center">**INTERNATIONAL SEARCH REPORT**</td><td>International application No.<br>PCT/JP2013/077512</td></tr>
</table>

A.  CLASSIFICATION OF SUBJECT MATTER
*H02K3/50*(2006.01)i, *H02K1/18*(2006.01)i, *H02K3/18*(2006.01)i, *H02K5/22*
(2006.01)i

According to International Patent Classification (IPC) or to both national classification and IPC

B.  FIELDS SEARCHED

Minimum documentation searched (classification system followed by classification symbols)
H02K3/50, H02K1/18, H02K3/18, H02K5/22

Documentation searched other than minimum documentation to the extent that such documents are included in the fields searched
Jitsuyo Shinan Koho           1922-1996   Jitsuyo Shinan Toroku Koho   1996-2013
Kokai Jitsuyo Shinan Koho     1971-2013   Toroku Jitsuyo Shinan Koho   1994-2013

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | WO 2009/060600 A1 (Mitsubishi Electric Corp.), 14 May 2009 (14.05.2009), paragraphs [0014] to [0018], [0024] to [0026]; fig. 1 to 4 (Family: none) | 1-4 |
| Y | JP 2009-148020 A (Mitsuba Corp.), 02 July 2009 (02.07.2009), paragraphs [0004] to [0016]; fig. 1 to 7 (Family: none) | 1-4 |
| Y | JP 2009-100616 A (JTEKT Corp.), 07 May 2009 (07.05.2009), paragraphs [0023] to [0039]; fig. 1 to 7 (Family: none) | 3-4 |

☒  Further documents are listed in the continuation of Box C.          ☐  See patent family annex.

| | | |
|---|---|---|
| *       Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>     20 December, 2013 (20.12.13) | Date of mailing of the international search report<br>     07 January, 2014 (07.01.14) |
|---|---|
| Name and mailing address of the ISA/<br>     Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/077512

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-369430 A  (Moteurs Leroy-Somer), 20 December 2002 (20.12.2002), paragraphs [0035] to [0038]; fig. 8 to 10 & US 2002/0148099 A1   & EP 1251622 A1 & FR 2823613 A1 | 1-4 |

Form PCT/ISA/210 (continuation of second sheet) (July 2009)

**EP 2 928 048 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012259868 A
- JP 2010233327 A